# EUROPÄISCHE PATENTANMELDUNG

(11) **EP 4 810 301 A1**
(43) Veröffentlichungstag der Anmeldung: **23.09.2026**
(21) Anmeldenummer: 26162494.4
(22) Anmeldetag: 05.03.2026
(51) Int. Cl.: B60L 53/00

(54) **LADESYSTEM FÜR BATTERIEELEKTRISCHE FAHRZEUGE**

(30) Priorität: 19.03.2025 DE 102025110548
(71) Anmelder: Amphenol Tuchel Industrial GmbH, 74080 Heilbronn (DE)
(72) Erfinder: BERTSCH, Michael, 74080 Heilbronn (DE)
(74) Vertreter: Staeger & Sperling Partnerschaftsgesellschaft mbB

(57) **Zusammenfassung**

Die Erfindung betrifft ein Ladesystem zur elektrisch leitenden, temporären Kopplung eines batterieelektrischen Fahrzeugs mit einer Ladestation, aufweisend eine Ladestecker-Zuleitungs-Vorrichtung, in einer im Wesentlichen vertikal hängenden Anordnung, wobei der Ladestecker der Ladestecker-Zuleitungs-Vorrichtung mit seinem Steckgesicht durch eine Positioniervorrichtung in eine zu dem Ladesteckergegenstecker des batterieelektrischen Fahrzeugs steckkompatible Ausrichtung gehaltert ist.

## Beschreibung

Die Erfindung betrifft ein Ladesystem zur elektrisch leitenden, temporären Kopplung eines batterieelektrischen Fahrzeugs mit einer Ladestation, aufweisend eine Ladestecker-Zuleitungs-Vorrichtung, in einer im Wesentlichen vertikal hängenden Anordnung.

Durch Vorgaben und Regularien wird die Erfüllung von Mobilitätsbedürfnissen zunehmend in Richtung batterieelektrischer Fahrzeuge gelenkt. Derart gestaltete Fahrzeuge speichern die für den elektromotorischen Antrieb benötigte elektrische Energie in Batteriespeichern, welche im Fahrzeug verbaut sind und immer wieder aufgeladen werden müssen, sobald die Speicherkapazität erschöpft ist. Dazu ist es erforderlich, dass die Fahrzeugbatterie über eine Ladebuchse mit einem Ladestecker lösbar verbunden wird, wobei der Ladestecker mit einer oder mehrerer Zuleitungen mit einer Stromquelle, meist in Form einer Ladestation, elektrisch leitend verbunden ist.

Um die Fahrzeugbatterie zuverlässig und möglichst zügig aufzuladen werden in einigen Fällen Ladeströme mit höherer oder hoher Leistung verwendet. Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A aufweisen. Noch deutlich höher können Ladeströme im Bereich von batterieelektrisch betriebenen Lastkraftwagen sein, da hier die abzurufende elektromotorische Antriebsleistung hoch ist und die von der Batterie zur Verfügung zu stellende elektrische Leistung höher sein muss als beispielsweise im Bereich der Personenkraftwagen. Bei sogenannten Megawatt-Charging-Systemen können die zu übertragenden elektrischen Leistungen am Steckverbinder beispielsweise bis zu 3.000 A und 1.500 V betragen.

Insbesondere bei hohen zu übertragenden elektrischen Leistungen ist es wichtig, dass die stromführenden Elemente sehr zuverlässig gegen Berührung gesichert sind, um Benutzer und Bediener von Ladesteckern zu schützen. Dazu werden die stromführenden Teile in einem nichtleitenden Ladesteckergehäuse eingeschlossen. Berührschutzmaßnahmen vergrößern den konstruktiven Aufbau von Ladesteckern und ziehen höhere Ladesteckergewichte nach sich.

Ebenfalls gewichtssteigernd sind Kühlungseinrichtungen der stromführenden Komponenten, insbesondere der Kontaktelemente innerhalb des Ladesteckers und der elektrischen Leitungen für die Zuführung der Elektrizität. Neben der Gewichtssteigerung der Ladestecker durch die häufig verwendete Flüssigkeitskühlung sind auch die Zuleitungen flüssigkeitsgekühlt oder separate Kühlflüssigkeitsleitungen mit oder ohne Integration in die Stromzuführungsleitungen vorgesehen. Dadurch wird nicht nur das Gewicht der Ladestecker-Leitung-Anordnung erhöht, sondern die Zuleitungen sind auch erheblich biegesteif und erschweren die Handhabung des Ladesteckers bei Zuführung und Kontaktierung mit der Ladebuchse des Fahrzeugs.

Im Ergebnis können in der Praxis bei Ladesystemen vor allem im höheren Ladeleistungsbereich Ladestecker-Zuleitungs-Vorrichtungen vorliegen, deren Handhabung durch deren hohe Eigengewichte und biegesteife Zuleitungen massiv erschwert ist.

Handhabungserschwernisse von höhergewichtigen Werkstücken, Werkzeugen und Packstücken sind bekannt und im Stand der Technik sind Lösungsvorschläge verfügbar, um die Erschwernisse zu reduzieren.

Ein möglicher Lösungsansatz sind beispielsweise passive oder aktive Exoskelette. Derartige Exoskelette werden von einem Benutzer während der Handhabungsaufgabe ganz oder teilweise am Körper getragen und reduzieren die gewichtskraftabhängige Belastung durch das zu handhabende Stück passiv durch abstützende Wirkung oder aktiv durch einen motorischen Antrieb.

Eine andere handhabungserleichternde Lösung für schwere Werkzeuge besteht darin, dass diese Werkzeuge an einem Gehänge aufgehängt sind und das Werkzeug gewichtskraftabhängig in ihrer Position haltern. Wird das Werkzeug beispielsweise für eine Werkzeugverwendung an einer Montagestelle unterhalb der Gehängestellung benötigt, kann ein Benutzer die Haltekraft des Gehänges durch Ziehen überwinden.

Im Handhabungsbereich von Ladesystemen in Form von Ladestecker-Zuleitungs-Vorrichtungen zur Übertragung elektrischer Energie zwischen einem zu ladenden Elektrofahrzeug und einer Ladesäule werden Kabelmanagementsysteme, Kabelführungseinrichtungen oder Wickelvorrichtungen verwendet, welche die Handhabung von Ladesystemen vereinfachen sollen. Derartige Kabelmanagementsysteme oder Kabelführungseinrichtungen sind beispielsweise beschrieben in den Druckschriften DE 20 2021 002 728 U1,
DE 10 2019 213 451 A1 und DE 20 2022 107 290 U1.

Die Druckschrift DE 10 2023 116 163 A1 stellt eine Kabelmanagementvorrichtung für eine Ladesäule zur Übertragung elektrischer Energie und/oder elektrischer Signale mittels eines Ladekabels und eines Ladesteckers vor, welche vor allem hinsichtlich Handhabung, Sicherheit, Zuverlässigkeit, Lebensdauer und Barrierefreiheit Verbesserungen enthalten soll. Dazu wird ein Kabelmanagementvorrichtung vorgeschlagen, umfassend eine Halteeinrichtung, welche zur Führung eines Ladekabelabschnitts des Ladekabels zwischen einem Parkzustand und einem Betriebszustand im Wesentlichen in einer Betätigungsrichtung verstellbar konfiguriert ist, wobei die Halteeinrichtung zur Montage in einem Gehäuse oder innerhalb eines Gehäuses der Ladesäule konfiguriert ist, und wobei die Halteeinrichtung zur Verstellung einer Lage des Ladekabelabschnitts, vorzugsweise umfassend eine Position und/oder eine Ausrichtung des Ladekabelabschnitts, eine erste Führungseinheit und eine zweite Führungseinheit umfasst, welche jeweils beweglich gelagert und miteinander oder aneinander gekoppelt sind, und wobei die erste Führungseinheit in Abhängigkeit einer definierten Verstellung der zweiten Führungseinheit verstellbar konfiguriert ist.

Die bekannten Kabelmanagementvorrichtungen stellen dem Benutzer eine Überkopflösung bereit, das heißt, dass das Ladesystem in Form von Ladestecker-Zuleitungs-Vorrichtung durch die Kabelmanagementvorrichtung aus einem Bereich oberhalb des Areals zwischen Ladesäule und zu ladendem Elektrofahrzeug herangeführt ist. Dadurch entsteht die Situation einer im Wesentlichen vertikal hängenden Zuleitung mit zuleitungsendseitigem Ladestecker. Das Steckgesicht des Ladesteckers ist in dieser Bereitstellungssituation mit seiner Steckrichtung zur lösbaren Steckverbindung mit einem Ladesteckergegenstecker ebenfalls weitgehend vertikal ausgerichtet. Die Steckrichtung des Ladesteckergegensteckers, der üblicherweise als Ladedose durch ein innerhalb des Elektrofahrzeugs verbauten Inlets ausgebildet ist, ist im Wesentlichen horizontal ausgerichtet. Dadurch ist es erforderlich, dass ein Benutzer die Steckrichtung des Steckgesichtes des Ladesteckers, ausgehend von der im Wesentlichen vertikalen Ausrichtung in die steckkompatible, im Wesentlichen horizontale Steckrichtung verschwenkt. Dies kann angesichts des Gewichtes des Ladesystems und der Biegesteifigkeit der Zuleitung insbesondere für weniger kräftige Benutzer problematisch sein.

Ein weiteres, sich durch die im Wesentlichen vertikal hängende Zuleitung mit zuleitungsendseitigem Ladestecker ergebendes Problem ist die dann zumindest teilweise nach oben gerichtete Ladestecker-Zuleitungsdichtung. Die Zuleitungsdichtung dichtet die Zuleitung an ihrem Eingang in das Ladesteckergehäuse ab. Es ist möglich, dass sich beispielsweise Regenwasser, das an der Zuleitung entlangläuft, durch die Ausrichtung der Ladesteckerzuleitung nach oben sammelt und Undichtigkeiten erzeugen kann.

Es ist Aufgabe der Erfindung eine Vorrichtung zur Erleichterung der Handhabung von Ladesteckern und deren Zuleitung in vertikal hängender Situation bereitzustellen, sodass die steckkompatible Ausrichtung des Steckgesichtes des Ladesteckers mit dem Steckgesicht des zu kontaktierenden Ladesteckergegenstecker eines batterieelektrischen Fahrzeugs unterstützt und die Nachteile des Standes der Technik wenigstens teilweise reduziert sind.

Zur Lösung der Aufgabe schlägt die Erfindung eine Positioniervorrichtung vor, die das Steckgesicht des Ladesteckers annähernd in eine steckkompatible Ausrichtung mit dem zu kontaktierenden Ladesteckergegenstecker eines batterieelektrischen Fahrzeugs bringt. Dazu wirkt die Positioniervorrichtung mit einem Abschnitt der Zuleitung und/oder dem Ladesteckergehäuse zusammen.

Um das Steckgesicht des Ladesteckers, welches in der vertikal hängenden Situation des Ladesteckers und dessen Zuleitung von der steckkompatiblen Ausrichtung zu dem Ladesteckergegenstecker bis zu 90° abweichen kann, in die zum Zusammenstecken geeigneten Position zu bringen, sieht die Erfindung eine Positioniervorrichtung, ausgebildet als Haltestrebe, Seil oder gekrümmte Kabelführung vor, welche angrenzend an den Ladestecker im Bereich der Zuleitung angeordnet ist. Die Positioniereinrichtung wirkt mit der Zuleitung derart zusammenwirkt, dass sich die Positioniervorrichtung gegen die Zuleitung abstützen und auf diese Weise die Haltekräfte zur Halterung des Ladesteckers in der steckkompatiblen Ausrichtung entgegen der wirkenden Schwerkraft und der Biegesteifigkeit der Zuleitung aufbringen kann.

Um die Abstützungsfunktion der Positioniervorrichtung zur Zuleitung realisieren zu können ist vorgesehen, dass die Positioniervorrichtung mit wenigstens einem Abschnitt der Zuleitung in kraft- und/oder drehmomenteinleitenden Weise gekoppelt ist. Auch möglich ist die Kopplung zusätzlich zu dem ersten Abschnitt der Zuleitung mit einem zweiten Abschnitt der Zuleitung.

Vorzugsweise ist ein Zuleitungskopplungsabschnitt, angrenzend an den Ladestecker vorgesehen. Alternativ kann ein zweiter Kopplungsbereich anstelle der Kopplung mit einem Zuleitungskopplungsabschnitt eine Kopplung der Positioniervorrichtung mit dem Ladesteckergehäuse des Ladesteckers sein.

Um die Positioniervorrichtung mit wenigstens einem Zuleitungskopplungsabschnitt koppeln zu können kann die Positioniervorrichtung wenigstens einen Kopplungsabschnitt, beispielsweise eine Klemmfaust, aufweisen, die eine Kraft- und/oder Drehmomentübertragung zwischen der Positioniervorrichtung und dem Zuleitungskopplungsabschnitt bereitstellt.

Durch die erfindungsgemäße Positioniervorrichtung ist es bei entsprechender konstruktiver Dimensionierung und Ausgestaltung der Geometrie möglich, eine oder mehrere steckkompatible Ausrichtungen des Steckgesichtes des Ladesteckers abgestimmt auf die jeweilige Ausrichtung des Steckgesichtes des Ladesteckergegensteckers (Ladedose, Inlet des batterieelektrischen Fahrzeugs) bereitzustellen.

Aufgrund der durch die Positioniereinrichtung erzielten Positionierung des Ladesteckers hinaus aus der vertikal hängenden Situation des Ladesteckers und dessen Zuleitung hinein in eine steckkompatible Position befindet sich die Ladestecker-Zuleitungsdichtung nicht in der Kopfüber-Ausrichtung, sodass eine Wasseransammlung von oben kommend verhindert wird und die Abdichtungsfunktion sichergestellt ist.

Die Erfindung wird im Folgenden anhand von vier exemplarischen Ausführungsbeispielen in Verbindung mit den Figuren näher erläutert. Dabei zeigen:
- Fig. 1: in einem ersten Ausführungsbeispiel ein Ladesystem, aufweisend eine Ladestecker-Zuleitungs-Vorrichtung mit Positioniervorrichtung in Form einer Strebe;
- Fig. 2: in einem zweiten Ausführungsbeispiel ein Ladesystem, aufweisend eine Ladestecker-Zuleitungs-Vorrichtung mit Positioniervorrichtung in Form eines Kabels;
- Fig. 3: in einem dritten Ausführungsbeispiel ein Ladesystem, aufweisend eine Ladestecker-Zuleitungs-Vorrichtung mit Positioniervorrichtung in Form einer Zuleitungsführung;
- Fig. 4: in einem vierten Ausführungsbeispiel ein Ladesystem, aufweisend eine Ladestecker-Zuleitungs-Vorrichtung mit Positioniervorrichtung in Form eines Winkelflansches.

Die Figuren erläutern die Erfindung anhand einer steckkompatiblen Ausrichtung eines Ladesteckergegensteckers eines batterieelektrischen Fahrzeugs mit einer in etwa horizontalen Steckachse. Die Positioniervorrichtung ist bei entsprechender geometrischer Anpassung auch für davon abweichende Steckachsenlagen anwendbar und umfasst diese ebenfalls.

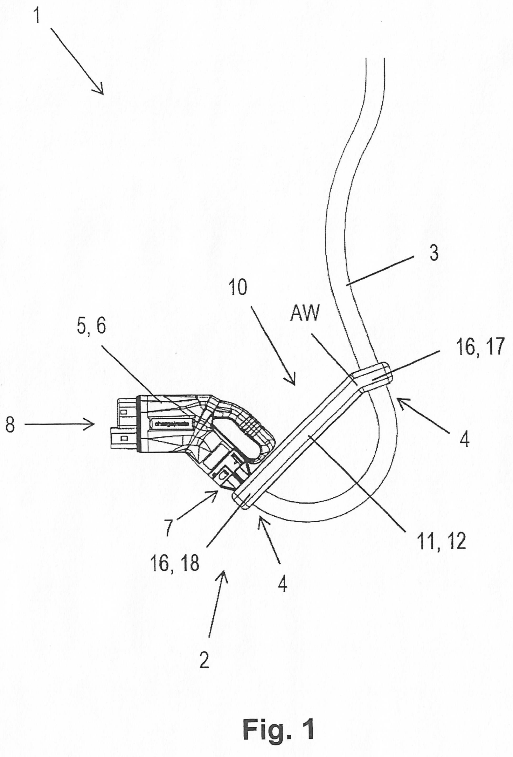

Fig. 1 zeigt in einem ersten Ausführungsbeispiel ein Ladesystem 1, aufweisend eine Ladestecker-Zuleitungs-Vorrichtung 2 mit Positioniervorrichtung 10 in Form eines durch eine Strebe 12 gebildeten Positionselementes 11. Das Ladesystem 1 mit seiner Ladestecker-Zuleitungs-Vorrichtung 2 ist dargestellt in einer Überkopfanordnung und somit in einer vertikal hängenden Situation. Die Positionsvorrichtung 10 sorgt dafür, dass die Ausrichtung des Steckgesichtes 8 in einer zu einem Steckgesicht eines Ladesteckergegensteckers des batterieelektrischen Fahrzeugs (nicht dargestellt) steckkompatiblen Position erfolgt. In den exemplarischen Ausführungsbeispielen wurde davon ausgegangen, dass die Steckrichtung horizontal verläuft.

Die Positioniervorrichtung 10 des in Fig. 1 dargestellten Ausführungsbeispiels umfasst ein Positionselement 11, das als Strebe 12 ausgebildet ist und sowohl Zug- als auch Torsionskräfte und Momente übertragen kann. Das Positionselement 11, 12 weist wenigstens einen Kopplungsabschnitt 16 zur Kopplung der Positioniervorrichtung 10 mit einem Zuleitungskopplungsabschnitt 4 der Zuleitung 3 der Ladestecker-Zuleitungs-Vorrichtung 2 auf. Je nach der zu erzielenden horizontalen oder davon abweichenden Ausrichtung des Steckgesichtes 8 kann der wenigstens eine erste Kopplungsabschnitt 16 als Klemmfaust 17 ausgebildet werden und endseitig des Positionselementes 11 angeordnet sein. Die Klemmfaust 17 koppelt die Positioniervorrichtung ortsfest an einen Zuleitungskopplungsabschnitt 4 der Zuleitung 3.

Das Positionselement 11 kann an seinem zweiten Ende einen weiteren Kopplungsabschnitt 16, gebildet durch eine zweite Klemmfaust 17, aufweisen. Alternativ und in Fig. 1 entsprechend so dargestellt, kann auch eine Führung 18 verwendet werden, die beispielsweise als Bohrung zur Durchleitung der Zuleitung 3 verwirklicht wird. Der zweite Kopplungsabschnitt 16 ist vorzugsweise angrenzend an dem Ladesteckergehäuse 6 des Ladesteckers 5 angeordnet.

Je nach zu erzielender Ausrichtung des Steckgesichtes 8 in die steckkompatible Position zu einem Steckgesicht des Ladesteckergegenstecker eines batterieelektrischen Fahrzeugs kann das Positionselement 11 eine Abwinkelung AW aufweisen, um in Abhängigkeit der Biegesteifigkeit der Zuleitung 3 und der Dimensionierungsverhältnisse der Bauteile zueinander die Ausrichtung des Steckgesichtes 8 in einer horizontalen oder davon abweichenden steckkompatiblen Situation zu beeinflussen. Das Ausführungsbeispiel der Fig. 1 zeigt die Abwinkelung AW zwischen der Strebe 12 des Positionselementes 11 und dem endseitigen ersten Kopplungsabschnitt 16, ausgebildet als Klemmfaust 17. Gleichfalls möglich sind Anordnungen von einer oder mehrerer Abwinkelungen AW in der Längserstreckung des Positionselementes 11 oder angrenzend an einen weiteren Kopplungsabschnitt 16.

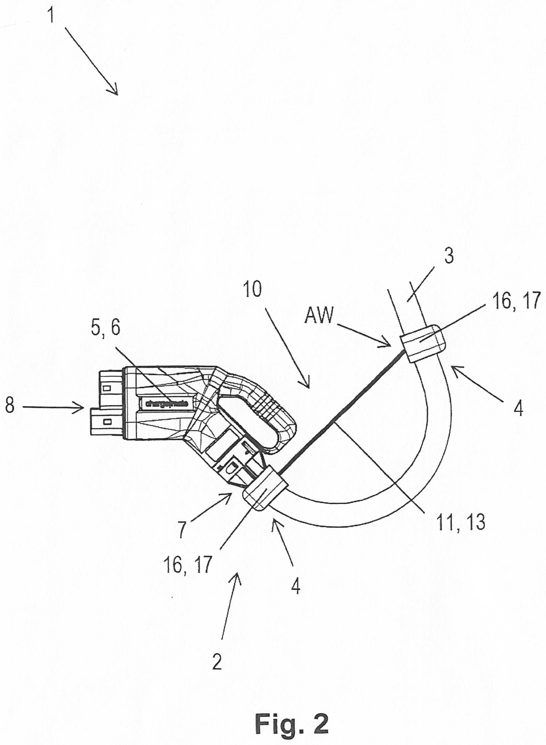

Fig. 2 zeigt ein zweites Ausführungsbeispiel eines Ladesystems 1, aufweisend eine Ladestecker-Zuleitungs-Vorrichtung 2 mit Positioniervorrichtung 10, dessen Positionselement 11 in Form eines Kabels 13 ausgebildet ist. Unter dem Begriff Kabel versteht die Erfindung Bauelemente, die in der Lage sind, Zugkräfte zu übertragen, nicht jedoch Torsions-, Biege- oder Querkräfte sowie Momente, beispielsweise Kabel, Seile, Stricke, Ketten, Schläuche.

Das Positionselement 11, ausgebildet als Kabel 13, weist einen ersten und einen zweiten Kopplungsabschnitt 16 auf, die jeweils als Klemmfaust 17 ausgebildet und mit der Zuleitung 3 in jeweils einem Zuleitungskopplungsabschnitt 4 gekoppelt sind. Der zweite Kopplungsabschnitt 16 ist auch bei dem zweiten Ausführungsbeispiel vorzugsweise angrenzend an dem Ladesteckergehäuse 6 des Ladesteckers 5 angeordnet.

Je nach genauer Lage der gewählten Zuleitungskopplungsabschnitte 4 und der Länge des Seiles 13 sowie der Biegesteifigkeit der Zuleitung 3 und dem Eigengewicht der Ladestecker-Zuleitungs-Vorrichtung 2 kann die Ausrichtung des Steckgesichtes 8 in die steckkompatible Position eingestellt werden, im gezeigten Ausführungsbeispiel eine annähernd horizontale Ausrichtung der Steckbewegung. Dabei kann sich je nach dem im Einzelfall vorliegenden Kräftegleichgewicht und in Abhängigkeit der Biegesteifigkeit der Zuleitung 3 eine Abwinkelung AW zwischen Klemmfaust 17 und Anschlagpunkt des Kabels 13 an der Klemmfaust 17 ergeben, die sich dadurch ergibt, dass das Kabel 13 durch seine biegeschlaffen Eigenschaften auf die Übertragung von Zugkräften beschränkt ist.

Vorteilhaft weisen die beiden Ausführungsbeispiele gemäß Fig. 1 und Fig. 2 eine Lage der Ladestecker-Zuleitungsdichtung 7 auf, die Wasseransammlungen durch an der Zuleitung 3 herablaufendes Wasser in Richtung der Ladestecker-Zuleitungsdichtung 7 verhindert. Die Ladestecker-Zuleitungsdichtung 7 ist im Einmündungsbereich der Zuleitung 3 hinein in das Ladesteckergehäuse 6 des Ladesteckers 5 angeordnet, wobei an der Zuleitung herablaufendes Wasser in dem durch die Positionsvorrichtung 10 gebildeten Schlaufe der Zuleitung 3 an deren tiefstem Punkt abtropft und die Ladestecker-Zuleitungsdichtung 7 nicht erreicht.

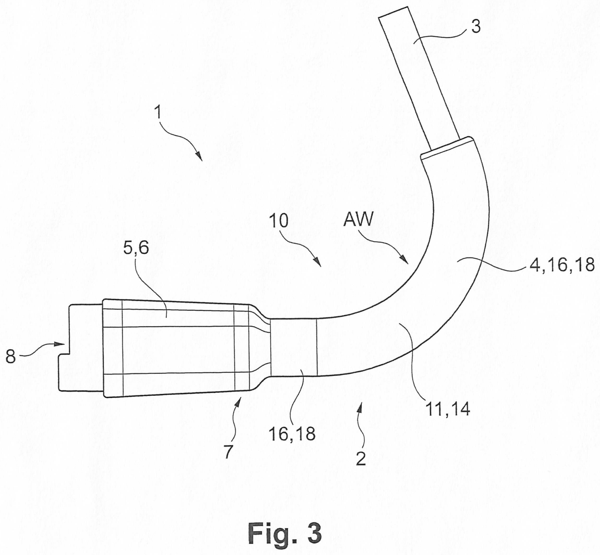

Fig. 3 zeigt in einem dritten Ausführungsbeispiel ein Ladesystem 1, aufweisend eine Ladestecker-Zuleitungs-Vorrichtung 2 mit Positioniervorrichtung 10 in Form eines durch eine Zuleitungsführung 14 gebildeten Positionselementes 11.

Das Positionselement 11 dieses Ausführungsbeispiels positioniert das Steckgesicht 8 des Ladesteckers 5 in eine steckkompatible Lage durch eine Zuleitungsführung 14, die vorzugsweise als wenigstens bereichsweise biegesteifes rohrförmiges Element ausgebildet ist und in seinem rohrförmigen Innern die Zuleitung 3 führt. Dabei wird ein Kopplungsabschnitt 16 umgesetzt, der sich wenigstens bereichsweise über die im Innern der Zuleitungsführung 14 aufgenommenen Zuleitung 3 erstreckt. Das bedeutet, dass sich der Zuleitungskopplungsabschnitt 4 der Zuleitung 3 und der Kopplungsabschnitt 16 der Positioniervorrichtung 10 über wenigstens einen Bereich des Positionselementes 11 erstrecken und funktional einer Führung 18 entspricht.

Die Zuleitungsführung 14 wird im Bereich des Ladesteckergehäuses 6 mit der Ladestecker-Zuleitungsdichtung 7 zusammengelegt und kann auftretende Kräfte und Momente wechselseitig zwischen dem Ladestecker 5 und der Zuleitungsführung 14 übertragen.

Durch die bogenförmige Ausgestaltung der Zuleitungsführung 14, die praktisch einer Abwinkelung AW entspricht, wird zusätzlich zu der Positionierung des Steckgesichtes 8 des Ladesteckers 5 in eine steckkompatible Lage erreicht, dass auch tiefere Zusammensteckpositionen mit dem Ladesteckergegenstecker im batterieelektrischen Fahrzeug erreicht werden können, beispielsweise wenn der Ladesteckergegenstecker unterhalb der Außenhülle eines batterieelektrischen Fahrzeug im Innern der Karosserie verbaut ist.

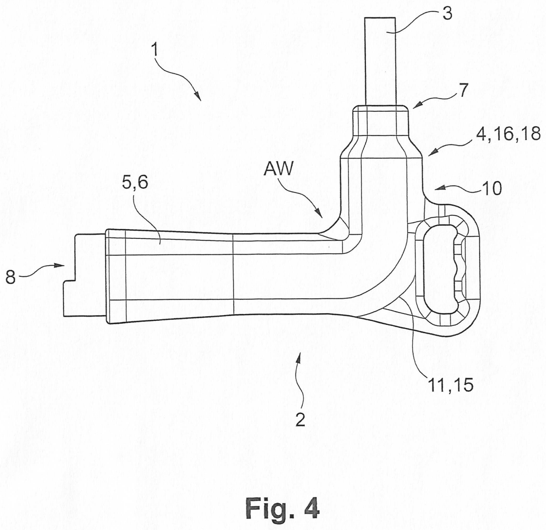

Fig. 4 zeigt in einem vierten Ausführungsbeispiel ein Ladesystem 1, aufweisend eine Ladestecker-Zuleitungs-Vorrichtung 2 mit einer Positioniervorrichtung 10 in Form eines durch einen Winkelflansch 15 gebildeten Positionselementes 11.

Das Positionselement 11 dieses Ausführungsbeispiels ist als Winkelflansch 15 konzipiert, der mit dem Ladesteckergehäuse 6 des Ladesteckers 5 gekoppelt oder integraler Bestandteil ist. Je nach der zu erzielenden steckkompatiblen Ausrichtung des Steckgesichtes 8 und möglichen unterschiedlichen Gewichtsverteilungen der Ladestecker-Zuleitungs-Vorrichtung 2 kann die Abwinkelung AW und damit der Winkel des Winkelflansches 15 angepasst sein. Im gezeigten Ausführungsbeispiel wurde eine Abwinkelung AW von 90° gewählt, um die Ausrichtung des Steckgesichtes 8 in die hier exemplarisch angenommene horizontale steckkompatible Situation zu bringen.

Vergleichbar mit dem Ausführungsbeispiel der Fig. 3 wird auch bei dem Positionselement 11, ausgebildet als Winkelflansch 15, ein Kopplungsabschnitt 16 umgesetzt, der sich wenigstens bereichsweise über die im Innern des Winkelflansches 15 aufgenommenen Zuleitung 3 erstreckt. Das bedeutet, dass sich der Zuleitungskopplungsabschnitt 4 der Zuleitung und der Kopplungsabschnitt 16 der Positioniervorrichtung 10 über wenigstens einen Bereich des Positionselementes 11 erstrecken und funktional einer Führung 18 entspricht.

Die relative Positionierung der Ladestecker-Zuleitungsdichtung 7 kann innerhalb des Positionselementes 11, ausgebildet als Winkelflansch 15, erfolgen oder alternativ an der Verbindungsstelle zwischen Ladesteckergehäuse 6 und Winkelflansch 15 verortet sein.

### Bezugszeichenliste

- 1: Ladesystem
- 2: Ladestecker-Zuleitungs-Vorrichtung
- 3: Zuleitung
- 4: Zuleitungskopplungsabschnitt
- 5: Ladestecker
- 6: Ladesteckergehäuse
- 7: Ladestecker-Zuleitungsdichtung
- 8: Steckgesicht

- 10: Positioniervorrichtung
- 11: Positionselement
- 12: Strebe
- 13: Kabel
- 14: Zuleitungsführung
- 15: Winkelflansch
- 16: Kopplungsabschnitt
- 17: Klemmfaust
- 18: Führung

- AW: Abwinkelung

## Patentansprüche

1. Ladesystem (1) zur elektrisch leitenden, temporären Kopplung eines batterieelektrischen Fahrzeugs mit einer Ladestation, aufweisend eine Ladestecker-Zuleitungs-Vorrichtung (2), in einer im Wesentlichen vertikal hängenden Anordnung, **dadurch gekennzeichnet, dass** der Ladestecker (5) der Ladestecker-Zuleitungs-Vorrichtung (2) mit seinem Steckgesicht (8) durch eine Positioniervorrichtung (10) in eine zu dem Ladesteckergegenstecker des batterieelektrischen Fahrzeugs steckkompatible Ausrichtung gehaltert ist.

2. Ladesystem (1) gemäß Anspruch 1, **dadurch gekennzeichnet, dass** die Positioniervorrichtung (10) ein Positionselement (11) mit wenigstens einem Kopplungsabschnitt (16) aufweist.

3. Ladesystem (1) gemäß Anspruch 2, **dadurch gekennzeichnet, dass** der wenigstens eine Kopplungsabschnitt (16) das Positionselement (11) in einem Zuleitungskopplungsabschnitt (4) mit der Zuleitung (3) der Ladestecker-Zuleitungs-Vorrichtung (2) koppelt.

4. Ladesystem (1) gemäß Anspruch 2, **dadurch gekennzeichnet, dass** das Positionselement (11) wenigstens eine Abwinkelung (AW) aufweist.

5. Ladesystem (1) gemäß Anspruch 2, **dadurch gekennzeichnet, dass** wenigstens ein Kopplungsabschnitt (16) eine Klemmfaust (17) ist.

6. Ladesystem (1) gemäß Anspruch 2, **dadurch gekennzeichnet, dass** wenigstens ein Kopplungsabschnitt (16) eine Führung (18) ist.

7. Ladesystem (1) gemäß Anspruch 2, **dadurch gekennzeichnet, dass** das Positionselement (11) eine Strebe (12) ist.

8. Ladesystem (1) gemäß Anspruch 2, **dadurch gekennzeichnet, dass** das Positionselement (11) ein Kabel (13) ist.

9. Ladesystem (1) gemäß Anspruch 2, **dadurch gekennzeichnet, dass** das Positionselement (11) eine Zuleitungsführung (14) ist.

10. Ladesystem (1) gemäß Anspruch 2, **dadurch gekennzeichnet, dass** das Positionselement (11) ein Winkelflansch (15) ist.
